# EUROPÄISCHE PATENTSCHRIFT

(11) **EP 0 563 034 B1**
(45) Veröffentlichungstag und Bekanntmachung des Hinweises auf die Patenterteilung: **18.10.1995**
(21) Anmeldenummer: 90917933.5
(22) Anmeldetag: 29.06.1990
(51) Int. Cl.: G11B 7/08

(54) **ABTASTVORRICHTUNG**
SCANNING DEVICE
DISPOSITIF DE LECTURE

(30) Priorität: 21.07.1989 DE 3924190
(43) Veröffentlichungstag der Anmeldung: 06.10.1993
(73) Patentinhaber: Deutsche Thomson-Brandt GmbH, 78003 Villingen-Schwenningen (DE)
(72) Erfinder: UHDE, Dietmar, D-7744 Königsfeld (DE); WEISSMANN, Gerhard, D-7730 Villingen-Schwenningen (DE)
(86) Internationale Anmeldenummer: EP9001036
(87) Internationale Veröffentlichungsnummer: WO9101549

(56) Entgegenhaltungen:
- EP-A- 0 137 283
- EP-A- 0 296 458
- EP-A- 0 326 246
- EP-A- 0 376 531
- EP-A- 0 379 757
- PATENT ABSTRACTS OF JAPAN, Volume 9, No. 90 (P-350)(1813) 19 April 1985 & JP-A-59 218 640

## Beschreibung

### Beschreibung für folgende Vertragsstaaten : AT, BE, ES, SE

Die Erfindung betrifft eine Abtastvorrichtung mit zwei Haltevorrichtungen, die mit einem Ende auf zwei gegenüberliegenden Seiten der Abtastvorrichtung oder eines Teils der Abtastvorrichtung befestigt sind und deren anderes Ende an einer festen Halterung befestigt ist.

Derartige Abtastvorrichtungen werden z.B. in CD-Spielern eingesetzt, um mittels eines Lichtstrahls die Daten einer CD-Platte zu lesen.

Aufbau und Funktion einer optischen Abtastvorrichtung, eines sogenannten optical pick-ups, sind in Electronic Components & Applications, Vol. 6, No. 4, 1984 auf Seite 209 - 215 beschrieben.

Der von einer Laserdiode ausgesendete Lichtstrahl wird mittels einer Objektivlinse auf die CD-Platte fokussiert und von dort auf einen Photodetektor reflektiert. Aus dem Ausgangssignal des Photodetektors werden die auf der CD-Platte gespeicherten Daten und der Istwert für den Fokus- und für den Spurregelkreis gewonnen. In der genannten Literaturstelle wird die Abweichung des Istwerts vom Sollwert für den Fokusregelkreis als focusing error bezeichnet, während für die Abweichung des Istwerts vom Sollwert des Spurregelkreises der Ausdruck radial tracking error gewählt ist.

Als Stellglied für den Fokusregelkreis dienen Spulen, über deren Magnetfelder eine Objektivlinse entlang der optischen Achse bewegbar ist. Der Fokusregelkreis bewirkt nun durch Verschieben der Objektivlinse, daß der von der Laserdiode ausgesendete Lichtstrahl stets auf die CD-Platte fokussiert wird. Mittels des Spurregelkreises, der oft auch als Radialantrieb bezeichnet wird, ist die optische Abtastvorrichtung bezüglich der CD-Platte in radialer Richtung verschiebbar. Dadurch kann der Lichtstrahl den spiralförmigen Datenspuren der CD-Platte folgen.

Bei einigen Geräten ist der Radialantrieb aus einem sogenannten Grob- und einem sogenannten Feinantrieb aufgebaut. Der Grobantrieb ist beispielsweise als Spindel ausgeführt, mittels der die gesamte optische Abtastvorrichtung aus der Laserdiode, den Linsen, dem Prismenstrahlteiler und dem Photodetektor radial verschiebbar ist. Mit dem Feinantrieb, für den ebenfalls Spulen als Stellgliedervorgesehen sind, ist der Lichtstrahl zusätlich in radialer Richtung verschiebbar. Mittels des Feinantriebs kann daher der Lichtstrahl ein kleines Stück- etwa 1 mm - entlang einem Radius der CD-Platte gefahren werden.

Um eine einwandfreie Wiedergabe der Daten, seien es nun z.B. Bild und Ton bei einem Videoplattenspieler oder bloß der Ton bei einem CD-Spieler oder die Daten einer magneto-optischen Lichtstrahls auf die Platte eine präzise Führung entlang den Datenspuren der Platte erforderlich.

Die Objektivlinse oder die gesamte optische Abtastvorrichtung muß daher sowohl senkrecht zur Plattenoberfläche als auch in radialer Richtung bewegbar sein, damit die als Stellglieder dienenden Spulen die Objektivlinse oder die optische Abtastvorrichtung in beide Richtungen verschieben können. Die Bewegung entlang der optischen Achse dient der Fokussierung, während die Bewegung parallel zur Plattenoberfläche der Spurnachführung dient.

Die Befestigung der Objektivlinse oder der optischen Abtastvorrichtung sollte einerseits leichtgängig sein, damit geringe Kräfte bereits genügen, um das Objektiv bzw. die optische Abtastvorrichtung zu bewegen. Andererseits darf die Anordnung nicht zu Schwingungen neigen. Außerdem sollte die Objektivlinse bzw. die optische Abtastvorrichtung möglichst genau parallel zur Senkrechten und möglichst genau parallel zur Plattenebene führbar sein.

Aus der EP-A 0 296 458 ist eine Abtastvorrichtung bekannt, bei der zwei parallel verlaufende lange Arme mit ihrem einen Ende an einem Halteblock befestigt sind. Am anderen Ende der beiden lange Arme sind an jedem langen Arm zwei kurze Arme befestigt. Die kurzen Arme verlaufen gegen die Mittelebene der beiden langen Arme. In der Mitte zwischen den beiden langen Armen wird ein Linsenhalter von den insgesamt vier kurzen Armen gehalten.

Figur 7 der EP-A 178 077 zeigt eine optische Abtastvorrichtung, deren Objektivlinse mittels vier paralleler Blattfedern an einem Rahmen befestigt ist, die in Richtung der optischen Achse - senkrecht zur Plattenoberfläche - auslenkbar und als Fokusfedern bezeichnet sind. Dieser Rahmen ist über vier weitere parallele Blattfedern, deren Schwingungsebene aber senkrecht zur Schwingungsebene der vier Fokusfedern steht, mit einem festen Gehäuseteil verbunden. Die Schwingungsebene dieser Blattfedern, die als Spurfedern bezeichnet sind, liegt parallel zur Plattenoberfläche.

Die in Figur 7 der genannten EP-A 0 178 077 dargestellte optische Abtastvorrichtung weist jedoch einige Nachteile auf.

Weil die Objektivlinse mittels Blattfedern am Gehäuse befestigt ist, neigt die Anordnung leicht zu Schwingungen. Außerdem gewährleisten die Blattfedern keine genaue parallele Führung der Objektivlinse.

Ein wesentlicher Nachteil besteht darin, daß die gesamte Anordnung aus vielen Teilen unterschiedlichen Materials zusammengebaut ist. Die Befestigung der Objektivlinse mittels der Blattfedern erfordert bei der Produktion sorgfältige mechanische Feinarbeiten, die nicht nur Zeit kosten, sondern auch die Produktionskosten erhöhen.

Es daher Aufgabe der Erfindung, eine Abtastvorrichtung anzugeben, die trotz einfachen Aufbaus und niederer Produktionskosten sehr genau parallel zur optischen Achse und zur Plattenebene führbar ist und die nicht zu Schwingungen neigt.

Die Erfindung löst diese Aufgabe dadurch, daß jede Haltevorrichtung aus zwei Endteilen, zwei Zwischenteilen und mindestens einem Mittelteil aufgebaut ist, die durch Gelenke miteinander verbunden sind, daß die parallelen Drehachsen der beiden äußeren Gelenke, welche die Endteile mit den Zwischenteilen verbinden, senkrecht zu den parallelen Drehachsen der beiden inneren Gelenke stehen, die das Mittelteil mit den Zwischenteilen verbinden.

Es zeigen
Figur 1 eine Ausführungsbeispiel einer Haltevorrichtung in Draufsicht
Figur 2 die Haltevorrichtung in Seitenansicht
Figur 3 ein Ausführungsbeispiel der Erfindung in Draufsicht
Figur 4 das Ausführungsbeispiel in Seitenansicht.

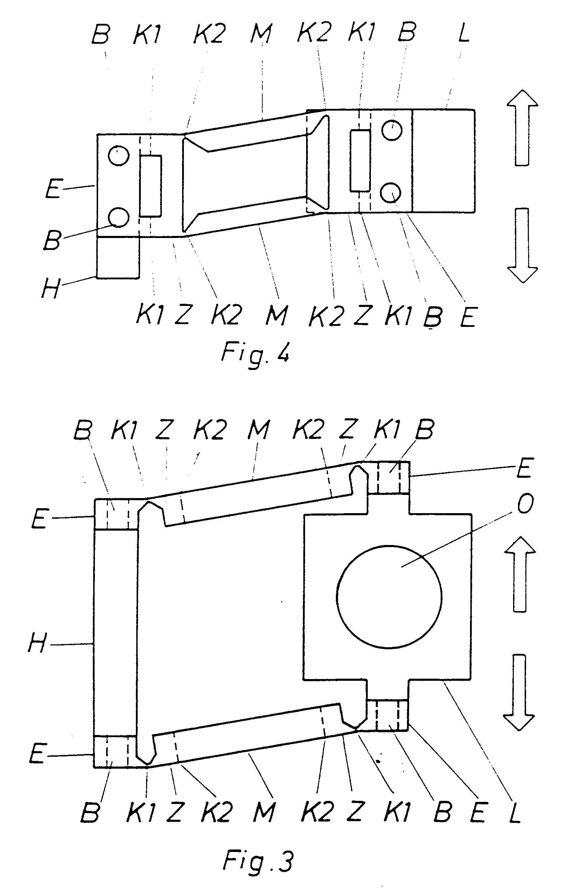

Anhand der Figuren 1 und 2 wird zunächst die Haltevorrichtung beschrieben und anschließend erläutert.

In Figur 2 ist eine Haltevorrichtung in Seitenansicht dargestellt, die symmetrisch aufgebaut ist. Auf ein Endteil E folgt ein Zwischenteil Z, auf das zwei parallele Mittelteile M folgen, an die sich wieder ein Zwischenteil Z und das andere Endteil E anschließen. Die einzelnen Teile sind auf folgende Weise durch Gelenke miteinander verbunden.

Die beiden Endteile E sind über je zwei Gelenke K1 mit den beiden Zwischenteilen Z verbunden. Zwischen den beiden Zwischenteilen Z sind die zwei parallel verlaufenden Mittelteile M vorgesehen, die mittels je eines Gelenkes K2 mit den Zwischenteilen Z verbunden sind. Die Drehachse der parallelen Gelenke K1 steht senkrecht zur Drehachse der parallelen Gelenke K2. Die Haltevorrichtung ist aus einem Stück aus Kunststoff gefertigt. An den Gelenkpunkten sind Einkerbungen vorgesehen, so daß Knickstellen gebildet werden, die als Gelenke K1 und K2 dienen. In den Endteilen E sind Bohrungen B vorgesehen, um auf der einen Seite die gesamte optische Abtastvorrichtung oder eines ihrer Teile, z.B. die Objektivlinse, und auf der anderen Seite die gesamte Anordnung an einem Halter H zu befestigen.

In der Figur 2 ist die Haltevorrichtung in Draufsicht dargestellt.

In Figur 3 ist ein Ausführungsbeispiel der Erfindung abgebildet, bei dem auf zwei gegenüberliegenden Seiten der Halterung Lfür eine Objektivlinse 0 zwei Haltervorrichtungen mit ihren einen Endteilen E befestigt sind. Die anderen Endteile E der beiden Haltevorrichtungen sind an einem festen Halter H befestigt.

Die Befestigung kann z.B. mittels Schrauben oder Stiften, die durch die Bohrungen B gesteckt werden, erfolgen. Durch den Doppelpfeil ist angedeutet, wie die Objektivlinse genau parallel zur Plattenoberfläche verschoben werden kann. Wie sich die Gelenke K1 an den Knickstellen ausbilden ist aus Figur 3 ebenfalls ersichtlich.

Figur4 zeigt das Ausführungsbeispiel aus Figur 3 in Seitenansicht. Der Doppelpfeil deutet an, daß die Objektivlinse genau parallel zur ihrer optischen Achse führbar ist. In Figur 4 ist ferner zu erkennen, wie sich die Gelenke K2 ausbilden, wenn die Objektivlinse parallel zur ihrer optischen Achse bewegt wird.

Die Objektivlinse 0 kann z.B. mittels Magneten und Spulen parallel zur optischen Achse und parallel zur Plattenoberfläche bewegt werden. Die Magnete können z.B. auf oder in der Linsenhalterung Langeordnet sein, während die Spulen rechts und links oder vor und hinterder Linsenhalterung Lvorgesehen sind. Der Übersichtlichkeit wegen sind die Spulen und die Magnete nicht in den Figuren 3 und 4 eingezeichnet.

Ein wesentlicher Vorteil der Erfindung liegt nun darin, daß die Haltevorrichtung aus einem Stück aus Kunststoff gefertigt werden kann, denn dadurch fallen die Produktionskosten niedriger aus als bei der Haltevorrichtung für die optische Abtastvorrichtung aus der eingangs genannten EP-A 0 178 077, die aus mehreren Federn und starren Teilen unterschiedlichen Materials zusammengesetzt ist. Weil bei der Haltevorrichtung der Erfindung nicht wie bei der bekannten Haltevorrichtung Federn als Verbindungsglieder vorgesehen sind, wird bei der Erfindung eine bessere parallele Führung der Objektivlinse oder der gesamten optischen Abtastvorrichtung erzielt. Die erfindungsgemäße optische Abtastvorrichtung neigt nicht in dem Maß wie eine optische Abtastvorrichtung, die mit Federn ausgerüstet ist, zu Schwingungen. Die Resonanzfrequenz und die Beweglichkeit lassen sich leicht durch Ändern derAbmessungen der Endteile, derZwischenteile, der Mittelteile sowie der Gelenke variieren. Die Resonanzfrequenz kann daher ohne zusätzliche Maßnahmen in einen unkritischen Bereich verlegt werden. Durch Ändern der Länge der Zwischenteile und der Mittelteile lassen sich auch die Hebellängen für beide Richtungen variieren.

Die Art der Abtastung - mechanisch oder berührungslos - spielt bei der erfindungsgemäßen Abtastvorrichtung keine Rolle. Sie ist insbesondere für optische Abtastvorrichtungen geeignet, wie sie z.B. in CD-Spielern, Videoplattenspielern, DRAW-Disc-Spielern oder magneto-optischen Aufnahme- und Wiedergabegeräten anzutreffen sind.

### Beschreibung für folgende Vertragsstaaten : DE, FR, GB, IT, NL

Die Erfindung betrifft eine Abtastvorrichtung mit zwei Haltevorrichtungen, die mit einem Ende auf zwei gegenüberliegenden Seiten der Abtastvorrichtung oder eines Teils der Abtastvorrichtung befestigt sind und deren anderes Ende an einem festen Halter befestigt ist,wobei jede Haltevorrichtung aus zwei Endteilen, zwei Zwischenteilen und mindestens einem Mittelteil aufgebaut ist, die durch Gelenke miteinanderverbunden sind, wobei die parallelen Drehachsen der beiden äußeren Gelenke, welche die Endteile mit den Zwischenteilen verbinden, senkrecht zu den parallelen Drehachsen der beiden inneren Gelenke stehen, die das Mitteilteil mit den Zwischenteilen verbinden, wobei die Endteile und die Zwischenteile zueinander parallel verlaufen, wobei jedes Endteil mittels mindestens einem Gelenk mit dem Zwischenteil verbunden ist, wobei zwei parallel zueinander verlaufende Mittelteile an ihren Enden über je ein Gelenk mit den Zwischenteilen verbunden sind.

Derartige Abtastvorrichtungen werden z.B. in CD-Spielern eingesetzt, um mittels eines Lichtstrahls die Daten einer CD-Platte zu lesen.

Aufbau und Funktion einer optischen Abtastvorrichtung, eines sogenannten optical pick-ups, sind in Electronic Components & Applications, Vol. 6, No. 4, 1984 auf Seite 209 - 215 beschrieben.

Der von einer Laserdiode ausgesendete Lichtstrahl wird mittels einer Objektivlinse auf die CD-Platte fokussiert und von dort auf einen Photodetektor reflektiert. Aus dem Ausgangssignal des Photodetektors werden die auf der CD-Platte gespeicherten Daten und der Istwert für den Fokus- und für den Spurregelkreis gewonnen. In der genannten Literaturstelle wird die Abweichung des Istwerts vom Sollwert für den Fokusregelkreis als focusing error bezeichnet, während für die Abweichung des Istwerts vom Sollwert des Spurregelkreises der Ausdruck radial tracking error gewählt ist.

Als Stellglied für den Fokusregelkreis dienen Spulen, über deren Magnetfelder eine Objektivlinse entlang der optischen Achse bewegbar ist. Der Fokusregelkreis bewirkt nun durch Verschieben der Objektivlinse, daß der von der Laserdiode ausgesendete Lichtstrahl stets auf die CD-Platte fokussiert wird. Mittels des Spurregelkreises, der oft auch als Radialantrieb bezeichnet wird, ist die optische Abtastvorrichtung bezüglich der CD-Platte in radialer Richtung verschiebbar. Dadurch kann der Lichtstrahl den spiralförmigen Datenspuren der CD-Platte folgen.

Bei einigen Geräten ist der Radialantrieb aus einem sogenannten Grob- und einem sogenannten Feinantrieb aufgebaut. Der Grobantrieb ist beispielsweise als Spindel ausgeführt, mittels der die gesamte optische Abtastvorrichtung aus der Laserdiode, den Linsen, dem Prismenstrahlteiler und dem Photodetektor radial verschiebbar ist. Mit dem Feinantrieb, für den ebenfalls Spulen als Stellgliedervorgesehen sind, ist der Lichtstrahl zusätzlich in radialer Richtung verschiebbar. Mittels des Feinantriebs kann daher der Lichtstrahl ein kleines Stück- etwa 1 mm - entlang einem Radius der CD-Platte gefahren werden.

Um eine einwandfreie Wiedergabe der Daten, seien es nun z.B. Bild und Ton bei einem Videoplattenspieler oder bloß der Ton bei einem CD-Spieler oder die Daten einer magneto-optischen Platte, zu erzielen, ist neben einer genauen Fokussierung des Lichtstrahls auf die Platte eine präzise Führung entlang den Datenspuren der Platte erforderlich.

Die Objektivlinse oder die gesamte optische Abtastvorrichtung muß daher sowohl senkrecht zur Plattenoberfläche als auch in radialer Richtung bewegbar sein, damit die als Stellglieder dienenden Spulen die Objektivlinse oder die optische Abtastvorrichtung in beide Richtungen verschieben können. Die Bewegung entlang der optischen Achse dient der Fokussierung, während die Bewegung parallel zur Plattenoberfläche der Spurnachführung dient.

Die Befestigung der Objektivlinse oder der optischen Abtastvorrichtung sollte einerseits leichtgängig sein, damit geringe Kräfte bereits genügen, um das Objektiv bzw. die optische Abtastvorrichtung zu bewegen. Andererseits darf die Anordnung nicht zu Schwingungen neigen. Außerdem sollte die Objektivlinse bzw. die optische Abtastvorrichtung möglichst genau parallel zur Senkrechten und möglichst genau parallel zur Plattenebene führbar sein.

Aus der EP-A 0 296 458 ist eine Abtastvorrichtung bekannt, bei der zwei parallel verlaufende lange Arme mit ihrem einen Ende an einem Halteblock befestigt sind. Am anderen Ende der beiden lange Arme sind an jedem langen Arm zwei kurze Arme befestigt. Die kurzen Arme verlaufen gegen die Mittelebene der beiden langen Arme. In der Mitte zwischen den beiden langen Armen wird ein Linsenhalter von den insgesamt vier kurzen Armen gehalten.

Figur 7 der EP-A 178 077 zeigt eine optische Abtastvorrichtung, deren Objektivlinse mittels vier paralleler Blattfedern an einem Rahmen befestigt ist, die in Richtung der optischen Achse - senkrecht zur Plattenoberfläche - auslenkbar und als Fokusfedern bezeichnet sind. Dieser Rahmen ist über vier weitere parallele Blattfedern, deren Schwingungsebene aber senkrecht zur Schwingungsebene der vier Fokusfedern steht, mit einem festen Gehäuseteil verbunden. Die Schwingungsebene dieser Blattfedern, die als Spurfedern bezeichnet sind, liegt parallel zur Plattenoberfläche.

Die in Figur 7 der genannten EP-A 0 178 077 dargestellte optische Abtastvorrichtung weist jedoch einige Nachteile auf.

Weil die Objektivlinse mittels Blattfedern am Gehäuse befestigt ist, neigt die Anordnung leicht zu Schwingungen. Außerdem gewährleisten die Blattfedern keine genaue parallele Führung der Objektivlinse.

Ein wesentlicher Nachteil besteht darin, daß die gesamte Anordnung aus vielen Teilen unterschiedlichen Materials zusammengebaut ist. Die Befestigung der Objektivlinse mittels der Blattfedern erfordert bei der Produktion sorgfältige mechanische Feinarbeiten, die nicht nur Zeit kosten, sondern auch die Produktionskosten erhöhen.

Aus der EP-A 0 326 246, die nur nach Art. 54(3) für DE, FR, GB, IT und NL relevant ist, ist eine weitere optische Abtastvorrichtung folgenden Aufbaus bekannt.

Zwei Haltevorrichtungen sind mit einem Ende auf zwei gegenüberliegenden Seiten der Abtastvorrichtung oder eines Teils der Abtastvorrichtung befestigt; deren anderes Ende ist an einem festen Halter befestigt. Jede Haltevorrichtung ist aus zwei Endteilen, zwei Zwischenteilen und mindestens einem Mittelteil aufgebaut, die durch Gelenke miteinander verbunden sind, Die parallelen Drehachsen der beiden äußeren Gelenke, welche die Endteile mit den Zwischenteilen verbinden, stehen senkrecht zu den parallelen Drehachsen der beiden inneren Gelenke, die das Mittelteil mit den Zwischenteilen verbinden. Die Endteile und die Zwischenteile verlaufen zueinander parallel. Jedes Endteil ist mittels mindestens einem Gelenk mit dem Zwischenteil verbunden. Zwei parallel zueinander verlaufende Mittelteile sind an ihren Enden über je ein Gelenk mit den Zwischenteilen verbunden.

Entsprechendes gilt für die EP-A-03 76 531, die nur nach Art. 54(3) für DE, FR und GB relevant ist.

Es daher Aufgabe der Erfindung, eine Abtastvorrichtung anzugeben, die trotz einfachen Aufbaus und niederer Produktionskosten sehr genau parallel zur optischen Achse und zur Plattenebene führbar ist und die nicht zu Schwingungen neigt.

Die Erfindung löst diese Aufgabe dadurch, daß die Abtastvorrichtung oder ein Teil der Abtastvorrichtung und der feste Halter an den Innenseiten der Haltevorrichtung befestigt sind.

Es zeigen
Figur 1 eine Ausführungsbeispiel einer Haltevorrichtung in Draufsicht
Figur 2 die Haltevorrichtung in Seitenansicht
Figur 3 ein Ausführungsbeispiel der Erfindung in Draufsicht
Figur 4 das Ausführungsbeispiel in Seitenansicht.

Anhand der Figuren 1 und 2 wird zunächst die Haltevorrichtung beschrieben und anschließend erläutert.

In Figur 2 ist eine Haltevorrichtung in Seitenansicht dargestellt, die symmetrisch aufgebaut ist. Auf ein Endteil E folgt ein Zwischenteil Z, auf das zwei parallele Mittelteile M folgen, an die sich wieder ein Zwischenteil Z und das andere Endteil E anschließen. Die einzelnen Teile sind auf folgende Weise durch Gelenke miteinander verbunden.

Die beiden Endteile E sind über je zwei Gelenke K1 mit den beiden Zwischenteilen Z verbunden. Zwischen den beiden Zwischenteilen Z sind die zwei parallel verlaufenden Mittelteile M vorgesehen, die mittels je eines Gelenkes K2 mit den Zwischenteilen Z verbunden sind. Die Drehachse der parallelen Gelenke K1 steht senkrecht zur Drehachse der parallelen Gelenke K2. Die Haltevorrichtung ist aus einem Stück aus Kunststoff gefertigt. An den Gelenkpunkten sind Einkerbungen vorgesehen, so daß Knickstellen gebildet werden, die als Gelenke K1 und K2 dienen. In den Endteilen E sind Bohrungen B vorgesehen, um auf der einen Seite die gesamte optische Abrastvorrichtung oder eines ihrer Teile, z.B. die Objektivlinse, und auf der anderen Seite die gesamte Anordnung an einem Halter H zu befestigen.

In der Figur 2 ist die Haltevorrichtung in Draufsicht dargestellt.

In Figur 3 ist ein Ausführungsbeispiel der Erfindung abgebildet, bei dem auf zwei gegenüberliegenden Seiten der Halterung Lfür eine Objektivlinse 0 zwei Haltervorrichtungen mit ihren einen Endteilen E befestigt sind. Die anderen Endteile E der beiden Haltevorrichtungen sind an einem festen Halter H befestigt. Die Befestigung kann z.B. mittels Schrauben oder Stiften, cie durch die Bohrungen B gesteckt werden, erfolgen. Durch den Doppelpfeil ist angedeutet, wie die Objektivlinse genau parallel zur Plattenoberfläche verschoben werden kann. Wie sich die Gelenke K1 an den Knickstellen ausbilden ist aus Figur 3 ebenfalls ersichtlich.

Figur4 zeigt das Ausführungsbeispiel aus Figur 3 in Seitenansicht. Der Doppelpfeil deutet an, daß die Objektivlinse genau parallel zur ihrer optischen Achse führbar ist. In Figur 4 ist ferner zu erkennen, wie sich die Gelenke K2 ausbilden, wenn die Objektivlinse parallel zur ihrer optischen Achse bewegt wird.

Die Objektivlinse 0 kann z.B. mittels Magneten und Spulen parallel zur optischen Achse und parallel zur Plattenoberfläche bewegt werden. Die Magnete können z.B. auf oder in der Linsenhalterung L angeordnet sein, während die Spulen rechts und links oder vor und hinterder Linsenhalterung Lvorgesehen sind. Der Übersichtlichkeit wegen sind die Spulen und die Magnete nicht in den Figuren 3 und 4 eingezeichnet.

Ein wesentlicher Vorteil der Erfindung liegt nun darin, daß die Haltevorrichtung aus einem Stück aus Kunststoff gefertigt werden kann, denn dadurch fallen die Produktionskosten niedriger aus als bei der Haltevorrichtung für die optische Abtastvorrichtung aus der eingangs genannten EP-A 0 178077, die aus mehreren Federn und starren Teilen unterschiedlichen Materials zusammengesetzt ist. Weil bei der Haltevorrichtung der Erfindung nicht wie bei der bekannten Haltevorrichtung Federn als Verbindungsglieder vorgesehen sind, wird bei der Erfindung eine bessere parallele Führung der Objektivlinse oder der gesamten optischen Abtastvorrichtung erzielt. Die erfindungsgemäße optische Abtastvorrichtung neigt nicht in dem Maß wie eine optische Abtastvorrichtung, die mit Federn ausgerüstet ist, zu Schwingungen. Die Resonanzfrequenz und die Beweglichkeit lassen sich leicht durch Ändern der Abmessungen der Endteile, der Zwischenteile, der Mittelteile sowie der Gelenke variieren. Die Resonanzfrequenz kann daher ohne zusätzliche Maßnahmen in einen unkritischen Bereich verlegt werden. Durch Ändern der Länge der Zwischenteile und der Mittelteile lassen sich auch die Hebellängen für beide Richtungen variieren.

DieArtderAbtastung - mechanisch oder berührungslos - spielt bei der erfindungsgemäßen Abtastvorrichtung keine Rolle. Sie ist insbesondere für optische Abtastvorrichtungen geeignet, wie sie z.B. in CD-Spielern, Videoplattenspielern, DRAW-Disc-Spielern oder magneto-optischen Aufnahme- und Wiedergabegeräten anzutreffen sind.

## Patentansprüche (Patentansprüche für folgende(n) Vertragsstaat(en) : DE, FR, GB, IT, NL)

1. Abtastvorrichtung mit zwei Haltevorrichtungen, die mit einem Ende auf zwei gegenüberliegenden Seiten der Abtastvorrichtung oder eines Teils der Abtastvorrichtung befestigt sind und deren anderes Ende an einem festen Halter (H) befestigt ist, dadurch gekennzeichnet, daß jede Haltevorrichtung aus zwei Endteilen (E), zwei Zwischenteilen (Z) und mindestens einem Mittelteil (M) aufgebaut ist, die durch Gelenke (K1, K2) miteinander verbunden sind, wobei die parallelen Drehachsen der beiden äußeren Gelenke (K1), welche die Endteile (E) mit den Zwischenteilen (Z) verbinden, senkrecht zu den parallelen Drehachsen der beiden inneren Gelenke (K2) stehen, die das Mitteilteil (M) mit den Zwischenteilen (Z) verbinden, wobei die Endteile (E) und die Zwischenteile (Z) zueinander parallel verlaufen, wobei jedes Endteil (E) mittels mindestens einem Gelenk (K1) mit dem Zwischenteil (Z) verbunden ist, wobei zwei parallel zueinander verlaufende Mittelteile (M) an ihren Enden über je ein Gelenk (K2) mit den Zwischenteilen (Z) verbunden sind, und die Abtastvorrichtung oder ein Teil der Abtastvorrichtung und der feste Halter (H) an einander gegenüberliegenden Innenseiten der Haltevorrichtungen befestigt sind.
2. Abtastvorrichtung nach Anspruch 1, dadurch gekennzeichnet, daß an den Gelenkstellen eine einseitige Einkerbung (K1, K2) vorgesehen ist, so daß eine Knickstelle gebildet wird, und daß die Einkerbungen zwischen den Endteilen (E) und den Zwischenteilen (Z) senkrecht zu den Einkerbungen zwischen den Mittelteilen (M) und den Zwischenteilen (Z) stehen.
3. Abtastvorrichtung nach Anspruch 1 oder 2, dadurch gekennzeichnet, daß die Haltevorrichtungen aus einem Stück aus Kunststoff gefertigt sind.

## Patentansprüche (Patentansprüche für folgende(n) Vertragsstaat(en) : AT, BE, ES, SE)

1. Abtastvorrichtung mit zwei Haltevorrichtungen, die mit einem Ende auf zwei gegenüberliegenden Seiten der Abtastvorrichtung oder eines Teils der Abtastvorrichtung befestigt sind und deren anderes Ende an einem festen Halter (H) befestigt ist, dadurch gekennzeichnet, daß jede Haltevorrichtung aus zwei Endteilen (E), zwei Zwischenteilen (Z) und mindestens einem Mittelteil (M) aufgebaut ist, die durch Gelenke (K1, K2) miteinander verbunden sind, daß die parallelen Drehachsen der beiden äußeren Gelenke (K1), welche die Endteile (E) mit den Zwischenteilen (Z) verbinden, senkrecht zu den parallelen Drehachsen der beiden inneren Gelenke (K2) stehen, die das Mitteilteil (M) mit den Zwischenteilen (Z) verbinden.

2. Abtastvorrichtung nach Anspruch 1, dadurch gekennzeichnet, daß die Endteile (E) und die Zwischenteile (Z) zueinander parallel verlaufen, daß jedes Endteil (E) mittels mindestens einem Gelenk (K1) mit dem Zwischenteil (Z) verbunden ist und daß zwei parallel zueinander verlaufende Mittelteile (M) an ihren Enden über je ein Gelenk (K2) mit den Zwischenteilen (Z) verbunden sind.

3. Abtastvorrichtung nach Anspruch 1 oder 2, dadurch gekennzeichnet, daß die Haltevorrichtungen aus einem Stück aus Kunststoff gefertigt sind, daß an den Gelenkstellen eine Einkerbung (K1, K2) im Kunststoff vorgesehen ist, so daß eine Knickstelle gebildet wird, und daß die Einkerbungen zwischen den Endteilen (E) und den Zwischenteilen (Z) senkrecht zu den Einkerbungen zwischen den Mittelteilen (M) und den Zwischenteilen (Z) stehen.

## Claims (Claims for the following Contracting State(s) : DE, FR, GB, IT, NL)

1. Scanning device with two holding devices which are affixed at one end to two opposing sides of the scanning device or a part of the scanning device the other ends of which are attached to a firm holder (H), characterised in that each holding device is constructed from two end parts (E), two intermediate parts (Z) and at least one central part (M) which are connected to each other by joints (K1, K2), wherein the parallel axes of rotation of the two outerjoints (K1), linking the end parts (E) to the intermediate parts (Z), are perpendicular to the parallel axes of rotation of the two inner joints (K2) which link the central part (M) to the intermediate parts (Z), wherein the end parts (E) and the intermediate parts (Z) lie parallel with each other, wherein end part (E) is connectedwith the intermediate part (Z) by means of at least one joint (K1), wherein the ends of two central parts (M), lying parallel with each other, are each connected with the intermediate parts (Z) via a joint (K2), and wherein the scanning device or a part thereof and the firm holder are fixed to inner sides of the holding devices which lie opposite one another.
2. Scanning device according to claim 1, characterised in that a one sided notch (K1, K2) is provided in the plastic material at the hinge points so that a kink position is formed, and that the notches between the end parts (E) and the intermediate parts (Z) are arranged perpendicular to the notches between the central parts (M) and the intermediate parts (Z).
3. Scanning device according to claim 1 or 2, characterised in that the holding devices are fabricated from one piece of plastic material.

## Revendications (Revendications pour l'(les) Etat(s) contractant(s) suivant(s) : DE, FR, GB, IT, NL)

1. Dispositifde balayage comportant deux dispositifs de support dont une des extremites est respectivement fixee sur les deux cötes opposes du dispositif de balayage ou d'une partie du dispositif de balayage et dont l'autre extremite est montee sur un support fixe (H), chaque dispositif de support etant constitue de deux pieces terminales (E), deux pieces intermediaires (Z) et au moins une piece centrale (M) reliees entre elles par des assemblages articules (K1, K2), les axes de rotation paralleles des deux assemblages articules exterieurs (K1) reliant les parties terminales (E) aux parties intermediaires (Z) etant perpendiculaires aux axes de rotation paralleles des deux assemblages articules interieurs (K2) reliant la partie centrale (M) aux parties intermediaires (Z), les parties terminales (E) et les parties intermediaires (Z) etant disposees en parallele et chaque partie terminale (E) etant reliee ä la partie intermediaire par au moins un assemblage articule (K1), deux parties centrales (M) disposees en parallele etant reliees ä leurs extremites ou parties intermediaires (Z) par un assemblage articule respectivement (K2), caracterise en ce que le dispositif de balayage ou une partie du dispositif de balayage et le support fixe sont montes sur les faces interieures opposees des dispositifs de support.
2. Dispositif de balayage selon la revendication 1, caractérisé en ce qu'une entaille unilaterale (K1, K2) est prevue au niveau des assemblages articules, de sorte qu'il se forme un point de flexion et que les entailles se trouvant entre les parties terminales (E) et les parties intermediaires (Z) soient perpendiculaires aux entailles entre les parties centrales (M) et les parties intermediaires (Z).
3. Dispositif de balayage selon la revendication 1 ou 2, caractérisée en ce que les dispositifs de support sont realises en une seule piece de matiere synthetique.

## Claims (Claims for the following Contracting State(s) : AT, BE, ES, SE)

1. Scanning device with two holding devices which are affixed at one end to two opposing sides of the scanning device or a part of the scanning device the other ends of which are attached to a firm holder (H), characterised in that each holding device is constructed from two end parts (E), two intermediate parts (Z) and at least one central part (M) which are connected to each other by joints (K1, K2), wherein the parallel axes of rotation of the two outer joints (K1), linking the end parts (E) to the intermediate parts (Z), are perpendicular to the parallel axes of rotation of the two inner joints (K2) which link the central part (M) to the intermediate parts (Z).

2. Scanning device according to claim 1, characterised in that the end parts (E) and the intermediate parts (Z) lie parallel with each other, wherein end part (E) is connected with the intermediate part (Z) by means of at least one joint (K1), and wherein the ends of two central parts (M), lying parallel with each other, are each connected with the intermediate parts (Z) via a joint (K2).

3. Scanning device according to claim 1 or 2, characterised in that the holding devices are fabricated from one piece of plastic material, wherein a one sided notch (K1, K2) is provided in the plastic material at the hinge points so that a kink position is formed, and that the notches between the end parts (E) and the intermdiate parts (Z) are arranged perpendicular to the notches between the central parts (M) and the intermediate parts (Z).

## Revendications (Revendications pour l'(les) Etat(s) contractant(s) suivant(s) : AT, BE, ES, SE)

1. Dispositif de balayage comportant deux dispositifs de support dont une des extrémités est respectivement fixée sur les deux côtés opposés du dispositif de balayage ou d'une partie du dispositif de balayage et dont l'autre extrémité est montée sur un support fixe (H), chaque dispositif de support étant constitué de deux pièces terminales (E), deux pièces intermédiaires (Z) et au moins une pièce centrale (M) reliées entre elles par des assemblages articulés (K1, K2), les axes de rotation parallèles des deux assemblages articulés extérieurs (K1) reliant les parties terminales (E) aux parties intermédiaires (Z) étant perpendiculaires aux axes de rotation parallèles des deux assemblages articulés intérieurs (K2) reliant la partie centrale (M) aux parties intermédiaires (Z).

2. Dispositif de balayage selon la revendiation 1, caractérisé en ce que les parties terminales (E) et les parties intermédiaires (Z) étant disposées en parallèle et chaque partie terminale (E) étant reliée à la partie intermédiaire (Z) par au moins un assemblage articulé (K1), et deux parties centrales (M) disposées en parallèle étant reliées à leurs extrémités aux parties intermédiaires (Z) par un assemblage articulé respectivement (K2).

3. Dispositif de balayage selon la revendication 1 ou 2, caractérisée en ce que les dispositifs de support sont réalisés en une seule pièce de matière synthéthique, une entaille unilatérale (K1, K2) étant prévue au niveau des assemblages articulés, de sorte qu'il se forme un point de flexion et que les entailles se trouvant entre les parties terminales (E) et les parties intermédiaires (Z) soient perpendiculaires aux entailles entre les parties centrales (M) et les parties intermédiaires (Z).
